# EUROPEAN PATENT APPLICATION

(11) **EP 4 039 101 A1**
(43) Date of publication of application: **10.08.2022**
(21) Application number: 21154987.8
(22) Date of filing: 03.02.2021
(51) Int. Cl.: A23G 1/00, A23G 1/04, A23L 5/40

(54) **METHOD OF PRODUCING DARK COCOA POWDER**

(71) Applicant: JS Cocoa Holding B.V., 1509 BR Zaandam (NL)
(72) Inventor: Kruithof, Stephan, 1521 XP Wormerveer (NL)
(74) Representative: De Vries & Metman

(57) **Abstract**

The invention relates to a method of producing dark cocoa powder comprising the steps of separating cocoa butter from cocoa solids and mixing an alkalizing agent with the cocoa solids, wherein the cocoa solids contain equal to or less than 7 wt% fat, the alkalizing agent is added in an amount of equal to or less than 7 wt%, and the cocoa solids are alkalized to an L-value of equal to or less than 9.

## Description

The invention relates to a method of producing dark cocoa powder, which method comprises the steps of separating cocoa butter from cocoa solids and mixing an alkalizing agent with the cocoa solids. The invention further relates to dark cocoa powder, preferably obtained with this method.

US 5,009,917 relates to a process for preparing dutched or alkalized cocoa, having a deeper or more intense red or black color, for use in coloring and/or flavoring foodstuffs.

Alkalized cocoa powders are used because of the attractive color and optionally flavor they impart to the finished product. Cocoa powders having a high coloring capacity are especially economical to use. Examples of applications of intensely alkalized cocoa powders include compounds and spreads, bakery products, dairy and ice cream products, chocolate, food supplements, low-fat products.

Also, the importance of the use of cocoa powders with great coloring capacity is highlighted by the general tendency to restrict the use of artificial colors, the use of which in the above foodstuffs is actually prohibited in many countries. It is, of course, also possible to mix cocoa powders with great coloring capacity and slightly alkalized or even non-alkalized cocoa powders, in order to obtain a mixture in which the advantages of both types of cocoas are combined.

In US 5,009,917, deep red or black dutched cocoa is produced by alkalizing cocoa presscake at between 150 DEG to 300 DEG F., 10 to 200 psi. and 5 to 180 minutes. During the alkalization reaction, the reaction vessel is partially vented and an oxygen-containing gas is fed to the reaction vessel to maintain pressure and effect headspace changes at the rate of at least 3 per hour.

WO 2018/237215 relates to a method of producing an alkalized cocoa material, comprising the steps of: (a) mixing a cocoa material, in particular beans, nibs or a mixture thereof, and an alkalizing agent; and (b) reacting the mixture of step (a) at a pressure of up to 12 bar and a temperature of 85 to 180°C, for 10 to 500 min; wherein step (b) is performed and under continuous air flow. Preferably, the alkalized cocoa material obtained in step (b) is pressed to produce cocoa butter and a cocoa cake which may, in turn, be ground to produce high-impact alkalized cocoa powder. The cocoa material used in step (a) may comprise - and will preferably consist essentially of - cocoa beans, cocoa nibs, or a mixture thereof.

WO 2018/237215 further relates to an alkalized cocoa powder obtainable according to the above method. It will advantageously have an L value of 12 or less, and a pH of less than 7,5, with an a-value preferably in the range of 2,0 to 7,0 and a b-value preferably in the range of 1,0 to 7,0.

WO 2013/128146 relates to a process for the production of black cocoa powder comprises an alkalization step in which an alkalizing salt is added to cocoa beans, or products derived therefrom, in the absence of iron. The alkalizing salt may be ammonium, calcium, magnesium, potassium or sodium carbonate, ammonium, potassium or sodium bicarbonate, ammonium, calcium, magnesium, potassium or sodium hydroxide, magnesium oxide or any combination thereof. Cocoa powder resulting from the process, and products comprising the cocoa powder, are also described.

It is an object of the present invention to provide an improved method of alkalizing cocoa and to provide an improved alkalized cocoa powder.

To this end, in the method according to the present invention, the cocoa solids contain equal to or less than 7 wt% fat, the alkalizing agent is added in an amount of equal to or less than 7 wt% (based on the weight of the solids), and the cocoa solids are alkalized to an L-value of equal to or less than 9.

In an embodiment, the cocoa solids contain equal to or less than 6 wt% fat (typically mostly or entirely cocoa butter), preferably equal to or less than 4 wt% fat, preferably equal to or less than 2 wt% fat. In an embodiment, the solids are fat-free, which in this context is defined as less than 0,5 wt% fat, preferably equal to or less than 0,4 wt%, e.g. 0,3 wt% fat.

It was found that, with the present invention, cocoa in particulate form, such as milled cocoa cake obtained with a screw press or an hydraulic press, can be alkalized with a relatively limited amount of alkali to intense dark colors with no or little negative effect on taste.

Suitable alkalizing agents alkali carbonate, bicarbonate or hydroxide compounds which have been known and used in the prior art. Preferred alkalizing agents include sodium and potassium carbonates, bicarbonates or hydroxides, calcium hydroxide, and/or ammonium bicarbonate or hydroxide. In an embodiment, the alkalizing agent is added in an amount of equal to or less than 6 wt%, preferably equal to or less than 5 wt%. The alkalizing agent is preferably dissolved in water, e.g. in a range from 10 to 30 wt% of alkali salt, before it is added to the cocoa solids.

In an embodiment, the cocoa solids are alkalized to an L-value of equal to or less than 7, preferably in a range from 3 to 6, an "a" value in a range from 1 to 3, preferably in a range from 1,5 to 2,5, and/or a "b" value in a range from 1 to 3, preferably in a range from 1 to 2.

In an embodiment, the solids have an average particle size in a range from 15 µm to 1,5 mm, preferably in range from 20 µm to 1,0 mm.

In another embodiment, the cocoa solids are alkalized at an overpressure in a range from 1 to 8 bar, preferably in a range from 4 to 7 bar, e.g. 6 bar, and/or a temperature in a range from 120 to 180 degrees Celsius and/or for a duration of less than 7 hours, preferably less than 180 minutes, preferably in a range from 20 to 120 minutes.

In an embodiment, the cocoa that is separated into cocoa butter and cocoa solids is in the form of beans or nibs, which work particularly well in a screw press.

In another embodiment, the cocoa solids are subjected to further separation of fat (de-fatting).

In an embodiment, further separation of fat from the cocoa solids is carried out by extraction, for instance solvent extraction.

In an example, further fat is extracted from cocoa cake obtained with a screw press, reducing the fat content e.g. to 2 wt% or less and/or using a liquid solvent, such as hexane. In another example, further fat is extracted from cocoa solids obtained by means a hydraulic (multi-pot) cocoa press using (supercritical) carbon dioxide as a solvent. Cocoa solids subjected to further separation, preferably extraction, of fat are particularly suitable for subsequently alkalizing the cocoa solids to very low L values by means of a relatively small amount of alkalizing agent

Further, the method according to the present was found effective not only with beans and nibs having a pH of around 5,3 and/or containing less than 3 wt% free fatty acids (FFA), which are currently generally preferred in the industry, but also with beans or nibs having a pH in a range from 5,8 to 6,3 and/or containing 3 to 35 wt% free fatty acids.

In an embodiment, the alkalized cocoa solids are milled, e.g. in a jet mill, to cocoa powder having an average particle size smaller than 75 µm, preferably to a cocoa powder wherein 99,5 wt% or more of the powder has a particle size smaller than 75 µm.

In another embodiment, after the cocoa solids have been alkalized and optionally milled, fat, in particular cocoa butter, is added to the cocoa solids, preferably to a total fat content in a range from 6 to 24 wt% fat, preferably in a range from 8 to 14 wt% fat, preferably in a range from 10 to 12 wt% fat. Thus, if required, an intense dark cocoa powder having a common fat content and reduced alkali can be provided, without the usual disadvantages of such cocoa powders (off-taste).

The invention further relates to a dark alkalized cocoa powder, preferably obtained with a method according to the present invention, containing equal to or less than 7 wt% fat, having an ash content equal to or less than 14 wt% FFDM (fat free dry matter) - indicating that equal to or less than 7 wt% alkalizing agent was added during alkalization - and having an L-value equal to or less than 9.

In an embodiment, the dark cocoa powder contains equal to or less than 6 wt% fat (typically mostly or entirely cocoa butter), preferably equal to or less than 4 wt% fat, preferably equal to or less than 2 wt% fat. In an embodiment, the powder is fat-free, which in this context is defined as less than 0,5 wt% fat, preferably equal to or less than 0,4 wt%, e.g. 0,3 wt% fat.

In an embodiment, the cocoa powder has an L-value of equal to or less than 7, preferably in a range from 3 to 6, an "a" value in a range from 1 to 3, preferably in a range from 1,5 to 2,5, and/or a "b" value in a range from 1 to 3, preferably in a range from 1 to 2.

In an embodiment, the cocoa particles have an average particle size smaller than 75 µm. In a refinement, 99,5 wt% or more of the powder has a particle size smaller than 75 µm.

In another embodiment, the cocoa powder has a pH in a range from 7,0 to 8,5.

Within the framework of this invention, measuring color is carried out by mixing 5.00 ±0.01 gram cocoa powder with 15.00 ml tap water, stirring till no lumps are visible, measuring L, a and b values on a ColorFlex^{®} EZ by HunterLab using an illuminant C and 2° standard observer. The results are an average of three measurements.

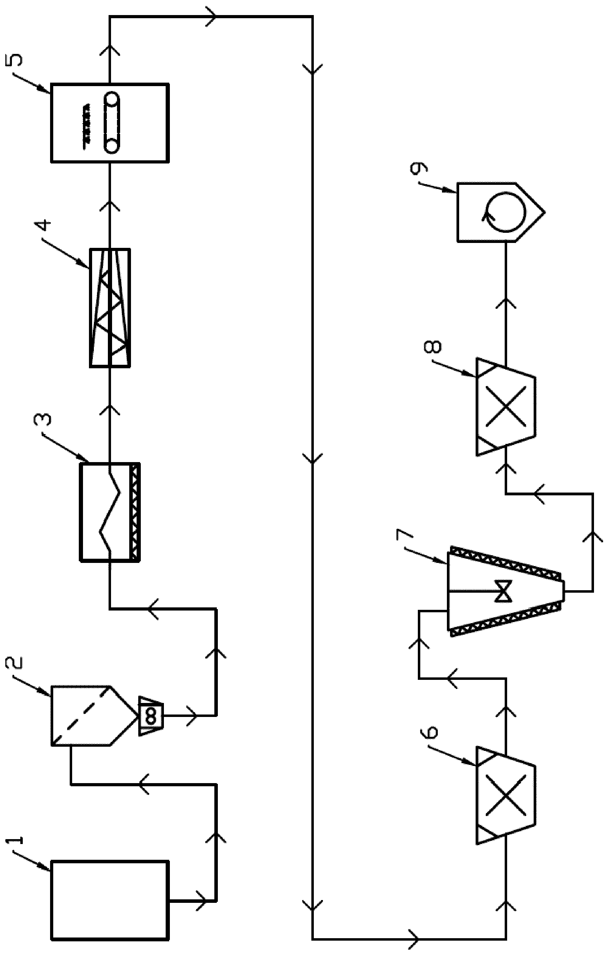

The invention will now be explained in more detail with reference to the Figure, which schematically shows an example of a production facility for carrying out the method according to the present invention.

More specifically, the Figure shows a supply 1 for beans, either roasted or unroasted, followed by a device 2 for deshelling (winnowing) and crushing the beans to form cocoa nibs. Downstream follows a heater 3 to raise the temperature of the nibs, a screw press, e.g. Rosedowns G type screw press 4, for pressing cocoa butter from the nibs and forming pellets of cocoa solids, having a fat content e.g. in a range from 10 to 18 wt%, e.g. 16 wt%. A solvent extractor 5 is provided to further reduce the fat content of the cocoa solids by means of a solvent, such as hexane, and e.g. to a fat content of less than 2 wt%.

Further downstream follows a mill, e.g. a hammer mill 6, to grind the particles to an average particle size of roughly 1 mm, a blender, preferably a conical screw, e.g. a Nauta mixer 7, for alkalizing the cocoa solids, a further mill, e.g. a jet mill 8, for reducing the particle size of the cocoa solids, and, optionally, depending of the type of mill, a separator, e.g. one or more cyclones 9.

In an example, cocoa beans having a pH of 6,2 were deshelled and crushed (2) to form nibs. The nibs were heated to 80 °C (3), and defatted in the screw press 4 to a fat content of 16 wt%. The pellets of cocoa solids from the press were subsequently defatted by extraction (5) with hexane (and the hexane removed from the extracted cocoa butter by means of distillation) to a fat content of 0,4 wt%. Next, the pellets were ground in the hammer mill 6 to grind the particles to an average particle size of roughly 1 mm, and fed to the Nauta mixer 7. An alkalizing agent, in this example potassium carbonate dissolved in water, in a concentration of 20 W/W% and an amount of 6,5 wt% based on the weight of the solids (6,5 grams potassium carbonate per 100 grams of cocoa solids), was added to the mixer and the cocoa solids were alkalized for 60 minutes at a temperature of 160 ° and a pressure of 6 bar.

The alkalized solids were milled in the jet mill 8 to form a cocoa powder having a particle size smaller than 75 µm (99,9% of the particles was smaller than 75 µm), a pH of 7,7, an ash content of 13,8 wt% FFDM (fat free dry matter), and color values L = 8,00, a = 3,08, and b = 2,72. The taste of the cocoa, other than a reduced acidity, remained substantially unaffected.

The invention is not restricted to the above-described embodiments, which can be varied in a number of ways within the scope of the claims. For instance, instead of using a screw press, the cocoa can be separated into cocoa butter and cocoa solids by means a hydraulic cocoa press.

## Claims

1. Method of producing dark cocoa powder comprising the steps of separating cocoa butter from cocoa solids and mixing an alkalizing agent with the cocoa solids, wherein the cocoa solids contain equal to or less than 7 wt% fat, the alkalizing agent is added in an amount of equal to or less than 7 wt%, and the cocoa solids are alkalized to an L-value of equal to or less than 9.

2. Method according to claim 1, wherein the cocoa solids contain equal to or less than 6 wt% fat, preferably equal to or less than 4 wt% fat, preferably equal to or less than 2 wt% fat.

3. Method according to claim 1 or 2, wherein the cocoa solids are alkalized to an L-value of equal to or less than 7, preferably in a range from 3 to 6, an "a" value in a range from 1 to 3, preferably in a range from 1,5 to 2,5, and/or a "b" value in a range from 1 to 3, preferably in a range from 1 to 2.

4. Method according to any one of the preceding claims, wherein the solids have an average particle size in a range from 15 µm to 1,5 mm, preferably in range from 20 µm to 1,0 mm.

5. Method according to any one of the preceding claims, wherein the cocoa solids are alkalized at an overpressure in a range from 1 to 8 bar, preferably in a range from 4 to 7 bar, e.g. 6 bar, and/or a temperature in a range from 120 to 180 degrees Celsius and/or for a duration of less than 7 hours, preferably less than 180 minutes, preferably in a range from 20 to 120 minutes.

6. Method according to any one of the preceding claims, wherein the cocoa that is separated into cocoa butter and cocoa solids is in the form of beans or nibs, preferably beans or nibs having a pH in a range from 5,8 to 6,3 and/or containing 3 to 35 wt% free fatty acids.

7. Method according to any one of the preceding claims, wherein cocoa nibs or beans are separated into cocoa butter and cocoa solids by means of a screw press.

8. Method according to any one of the preceding claims, wherein the cocoa solids are subjected to further separation of fat, preferably by means of extraction.

9. Method according to any one of the preceding claims, wherein the alkalized cocoa solids are milled, e.g. in a jet mill, to cocoa powder having an average particle size smaller than 75 µm, preferably to a cocoa powder wherein 99,5 wt% or more has a particle size smaller than 75 µm.

10. Method according to any one of the preceding claims, wherein, after the cocoa solids have been alkalized and optionally milled, fat, in particular cocoa butter, is added to the cocoa solids, preferably to a total fat content in a range from 6 to 24 wt% fat, preferably in a range from 8 to 14 wt% fat, preferably in a range from 10 to 12 wt% fat.

11. Dark cocoa powder, preferably obtained with a method according to any one of the preceding claims, containing equal to or less than 7 wt% fat, having an ash content equal to or less than 14 wt% FFDM (fat free dry matter) and having an L-value equal to or less than 9.

12. Cocoa powder according to claim 11, containing equal to or less than 6 wt% fat, preferably equal to or less than 4 wt% fat, preferably equal to or less than 2 wt% fat. In an embodiment, the powder is fat-free, which in this context is defined as less than 0,5 wt% fat, preferably equal to or less than 0,4 wt%, e.g. 0,3 wt% fat.

13. Cocoa powder according to claim 11 or 12, wherein the cocoa particles have an average particle size smaller than 75 µm, preferably 99,5 wt% or more of the powder has a particle size smaller than 75 µm.

14. Cocoa powder according to any one of claims 11 to 13 containing added fat, preferably to a total fat content in a range from 6 to 24 wt% fat, preferably in a range from 8 to 14 wt% fat, preferably in a range from 10 to 12 wt% fat.

15. Cocoa powder according to any one of claims 11 to 14, having a pH in a range from 7,0 to 8,5.
